**Europäisches Patentamt**

(19) **European Patent Office**

**Office européen des brevets**

(11) Veröffentlichungsnummer: **0 185 892**

**B1**

(12) # EUROPÄISCHE PATENTSCHRIFT

(45) Veröffentlichungstag der Patentschrift:
04.10.89

(51) Int. Cl.⁴: **B 60 R 13/04**

(21) Anmeldenummer: **85113798.4**

(22) Anmeldetag: **30.10.85**

(54) Lösbare Befestigung einer Zierleiste.

(30) Priorität: **22.12.84 DE 3447097**

(43) Veröffentlichungstag der Anmeldung:
**02.07.86 Patentblatt 86/27**

(45) Bekanntmachung des Hinweises auf die Patenterteilung:
**04.10.89 Patentblatt 89/40**

(84) Benannte Vertragsstaaten:
**DE FR GB IT**

(56) Entgegenhaltungen:
**DE-A-3 033 389**
**GB-A-2 051 202**
**US-A-2 856 230**
**US-A-3 631 569**
**US-A-3 740 800**
**US-A-4 092 766**
**US-A-4 147 005**

(73) Patentinhaber: **Dr.Ing.h.c. F. Porsche Aktiengesellschaft, Porschestrasse 42, D-7000 Stuttgart 40 (DE)**

(72) Erfinder: **Lehmann, Klaus- Peter, Gladiolenweg 8, D-7130 Mühlacker (DE)**
Erfinder: **Anhegger, Sigmund, Keltenstrasse 10, D-7253 Renningen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine lösbare Befestigung einer Zierleiste an einem Tragflansch eines Kraftfahrzeuges der im Gattungsbegriff des Patentanspruchs 1 aufgegebenen Art.

Eine solche lösbare Zierleistebefestigung ist aus der GB-A-2 051 202 bekannt.

Die GB-A 2 051 202 zeigt eine Himmelbefestigung an einem Kraftfahrzeug, wobei eine Halteklammer auf einen aufbauseitigen Tragflansch aufgesteckt ist und diesen beidseitig umgreift. Ein dem Himmel zugekehrter Schenkel dieser Halteklammer weist endseitig einen halbkreisförmig gebogenen Aufnahmeabschnitt auf, der einen am Himmel vorgesehenen Befestigungsdraht formschlüssig umgreift und somit den Himmel umfangsseitig fixiert. Ein am Tragflansch angebrachter Bundbolzen bzw. ein Querbolzen ist bei dieser Anordnung entgegen der Auffassung der Prüfungsstelle nicht vorgesehen.

Zur Abdeckung der Halteklammer ist eine U-förmig profilierte Zierleiste mit zwei etwa parallel und mit Abstand zum Tragflansch verlaufenden Stützabschnitten vorgesehen, wobei an jedem Stützabschnitt eine einzige stufenförmige Aufnahme ausgebildet ist, in die ein Rastglied der Halteklammer eingreift. Die Stützabschnitte liegen lediglich an der Halteklammer und nicht am Tragflansch an.

Dieser Zierleistenbefestigung haftet der Nachteil an, daß keine Einstellbarkeit der Zierleiste relativ zum Aufbau (insbesondere in Fahrzeugquerrichtung A - A) möglich ist, so daß der Tragflansch, die Halteklammer und die Zierleiste relativ maßgenau gefertigt werden müssen, was teuer ist.

Eine Leistenbefestigung ähnlicher Art geht aus der DE-B-2 122 250 hervor. Nachteilig bei dieser Ausführung ist, daß keine Vorkehrungen zum Ausgleich von Fertigungstoleranzen vorgesehen sind.

Aus der DE-C-3 033 389 ist eine auf einen Tragflansch aufgesetzte Halteklammer bekannt, auf die eine Zierleiste aufklipsbar ist. An der Halteklammer sind ein Federelement und ein nasenartiger Vorsprung angebracht, die mit einer Stützschulter bzw. einer nutartigen Ausnehmung der Zierleiste hintergreifend zusammenwirken.

Um bei dieser Zierleistenbefestigung eine einwandfreie Funktion zu gewährleisten, müssen der Tragflansch, die Halteklammer und die Zierleiste relativ maßgenau gefertigt werden, was teuer ist. Außerdem muß zur Demontage der Zierleiste ein Hilfswerkzeug zwischen Tragflansch und Zierleiste eingeführt werden, das die Lackoberfläche des Tragflansches beschädigt. Darüber hinaus ist diese Zierleiste gegenüber dem Aufbau nicht einstellbar, wodurch über die Längserstreckung der Zierleiste ein unterschiedlich großer Spalt zwischen Aufbau und Zierleiste entsteht. Solche sichtbaren Ungenauigkeiten führen zu einer Qualitätsbeeinträchtigung.

Aufgabe der Erfindung ist es, eine Zierleiste so auszubilden, daß sie bei sicherer Befestigung relativ zum Aufbau einstellbar sowie einfach montier- und demontierbar ist.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die einstellbare Befestigung der Zierleiste übliche Toleranzen ausgeglichen werden, d. h., daß störende Formverläufe zwischen Aufbau und Zierleiste vermieden werden. Durch das Zusammenwirken von Ausnehmungen der Zierleiste mit Rastgliedern der Halteklammern ist eine sichere Befestigung der Zierleiste gewährleistet. Durch den abgestellten Steg der Halteklammer ist eine einfache Demontage der Zierleiste möglich. Der Steg muß lediglich mittels eines durch den Spalt zwischen Zierleiste und Wandabschnitt hindurchgeführten Hilfswerkzeuges nach unten in eine Freigabestellung gedrückt werden.

Ein an der Zierleiste befestigtes Dichtelement deckt den Spalt zwischen der Zierleiste und einem vertikalen Wandabschnitt des Daches ab und verhindert so Wassereintritt in den Innenhohlraum der Zierleiste.

Ein Ausführungsbeispiel der Erfindung ist in der Zeichnung dargestellt und wird im folgenden näher beschrieben.
Es zeigt

Fig. 1 einen Teilschnitt durch einen Dachrahmen mit der erfindungsgemäßen Zierleistenbefestigung,

Fig. 2 eine Ansicht entsprechend Fig. 1 einer weiteren Ausführungsform einer Zierleistenbefestigung,

Fig. 3 eine Ansicht in Pfeilrichtung R der Fig. 2, wobei lediglich die Halteklammer, der Tragflansch und der Bundbolzen dargestellt sind.

Ein Dach 1 und ein Seitenteil 2 sind an einem gemeinsamen Tragflansch 3 durch Punktscheißen miteinander verbunden. Der etwa horizontal ausgerichtete Tragflansch 3 setzt sich aus abgewinkelten Wandungen 4, 5 des Daches 1 und des Seitenteils 2 zusammen. Die Wandung 4 und ein etwa vertikal dazu verlaufender Wandabschnitt 6 bilden eine außenliegende, stufenförmige Abstellung 7 des Daches 1.

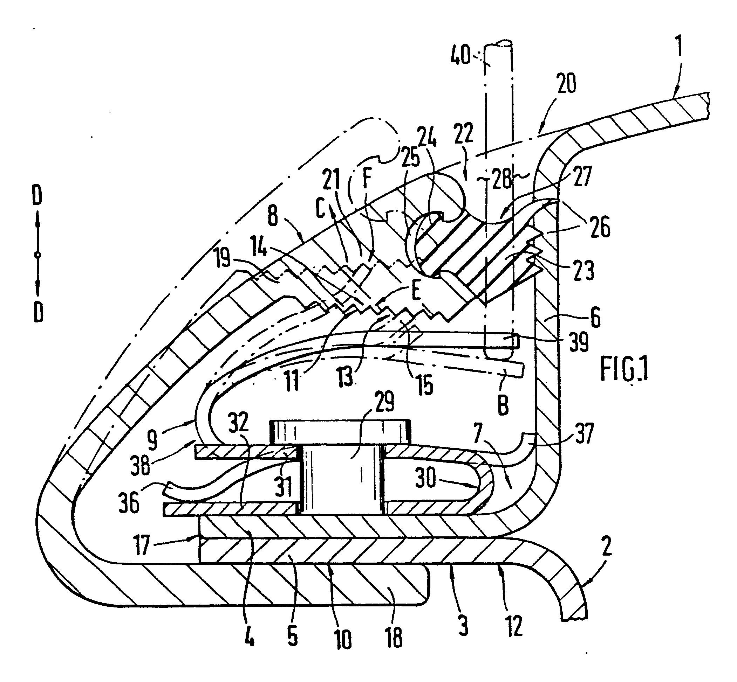

Zur Abdeckung des Tragflansches 3 bzw. der stufenförmigen Abstellung 7 ist eine Zierleiste 8 vorgesehen, die unter Vermittlung von Halteklammern 9 lösbar am Tragflansch 3 befestigt ist. Die aus Kunststoff oder Leichtmetall hergestellte Zierleiste 8 weist zwei im wesentlichen parallel verlaufende Stützabschnitte 10, 11 auf, von denen ein Stützabschnitt 10 mit seiner Innenseite abschnittsweise an der Unterseite 12 des Tragflansches 3 anliegt. An der oberhalb des Tragflansches 3 sich erstreckenden Halteklammer 9 ist gemäß Fig. 1 wenigstens ein Rastglied 13 vorgesehen, das in eine von mehreren hintereinanderliegend angeordneten Ausnehmungen 14 des dem Stützabschnitt 10 gegenüberliegenden Stützabschnittes 11 form- und kraftschlüssig eingreift.

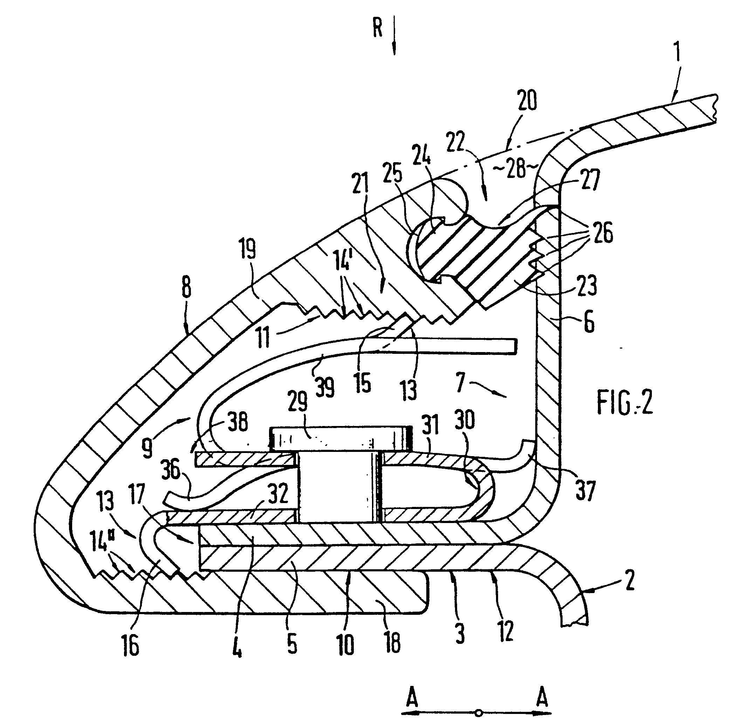

Nach Fig. 2 sind an beiden Stützabschnitten 10, 11 mehrere Ausnehmungen 14 bzw. 14' und 14'' vorgesehen, die mit angrenzenden Rastgliedern 13 der Halteklammer 9 zusammenwirken. Vorzugsweise werden die Rastglieder 13 durch abgestellte federnde Zungen 15, 16 der Halteklammer 9 gebildet, wobei die Zungen 15 zum Stützabschnitt 11 gerichtet sind, während sich die Zungen 16 zum Stützabschnitt 10 hin erstrecken. Die Zungen 16 sind vor einem freien Ende 17 des Tragflansches 3 angeordnet.

Es besteht aber auch die Möglichkeit, die Rastglieder 13 als nasenartige Vorsprünge oder nockenförmige Abstellungen auszubilden.

Die Ausnehmungen 14 sind entsprechend den Fig. 1 und 2 sägezahnartig ausgebildet. Zur Verdeutlichung sind in Fig. 2 die am oberen Stützabschnitt 11 angeordneten Ausnehmungen mit dem Bezugszeichen 14' bezeichnet, wogegen die am unteren Stützabschnitt 10 vorgesehenen Ausnehmungen des Bezugszeichen 14'' tragen. In Fahrzeugquerrichtung A - A gesehen, sind die Ausnehmungen 14' versetzt zu den Ausnehmungen 14'' angeordnet. Es wäre aber auch denkbar, die Ausnehmungen 14 wellen- bzw. rillenförmig zu gestalten. Durch die Anordnung von jeweils mehreren aneinandergesetzten Ausnehmungen 14 ist die Zierleiste 8 in Fahrzeugquerrichtung A - A einstellbar, wodurch übliche Fertigungs- und Einbautoleranzen ausgleichbar sind.

Der Stützabschnitt 10 bildet einen Schenkel 18 der im Querschnitt etwa V-förmigen Zierleiste 8, wogegen der andere Schenkel 19 an den Formverlauf der Dachkontur 20 angepaßt ist. Der Stützabschnitt 11 stellt die untere Begrenzung einer etwa dreieckförmigen Querschnittserweiterung 21 des Schenkels 19 dar. Ein oberer Endabschnitt des Schenkels 19 verläuft unter Bildung eines Spaltes 22 zum angrenzenden Wandabschnitt 6. Zur Abdeckung des Spaltes 22 ist ein aus elastischem Werkstoff gefertigtes Dichelement 23 vorgesehen, das mit einem Halteabschnitt 24 in eine, mit einer Hinterschneidung versehene Nut 25 der Zierleiste 8 eingreift. Die Nut 25 ist im Bereich der Querschnittserweiterung 21 vorgesehen und zum Wandabschnitt 6 hin offen ausgebildet.

Ferner weist das Dichtelement 23 Lippen 26 auf, die sich unter Vorspannung am Wandabschnitt 6 abstützen. Eine obere Begrenzung 27 des Dichtelementes 23 verläuft mit Abstand zur Dachkontur 20, wodurch eine Regenrinne 28 gebildet wird.

Die aus Federstahl gefertigten Halteklammern sind unter Vermittlung von Bundbolzen 29 am Tragflansch 3 befestigt. Jeder Bundbolzen 29 ist oberhalb der Wandung 4 angeordnet und etwa vertikal zu dieser ausgerichtet. Die Halteklammer 9 weist gemäß den Fig. 1 und 2 einen etwa U-förmigen Grundkörper 30 auf, dessen Schenkel 31, 32 zwischen Bundbolzen 29 und Wandung 4 festgelegt sind.

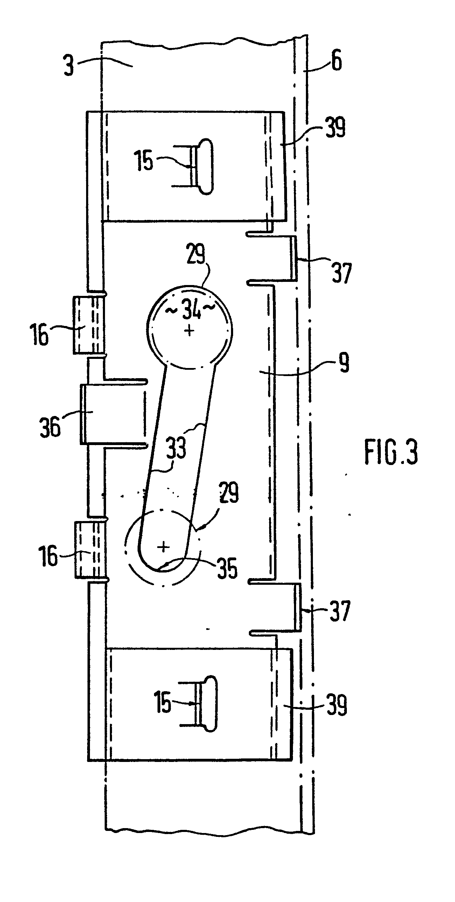

Zum Einsetzen der Halteklammer 9 sind an den Schenkeln 31, 32 Längsschlitze 33 vorgesehen, wobei jeweils an Ende des Längsschlitzes 33 einen einen größeren Querschnitt aufweisenden Einführabschnitt 34 für den Bundbolzen 29 besitzt (Fig. 3). Die von oben auf den Bundbolzen 29 aufgesteckte Halteklammer 9 wird anschließend entlang des schrägverlaufenden Längsschlitzes 33 verschoben, bis der Bundbolzen 29 am anderen Ende 35 des Längsschlitzes 33 anliegt. In dieser Lage ist die Halteklammer 9 am Tragflansch 3 festgelegt.

Nach Fig. 2 endet der untere Schenkel 32 benachbart dem freien Ende 17 des Tragflansches 3. Gemäß Fig. 3 sind am Schenkel 32 die örtlich vorgesehenen Zungen 16 angebracht. Damit die beiden Schenkel 31, 32 in parallelem Abstand zueinander verbleiben, ist vom Schenkel 31 eine Stützzunge 36 weggeführt, die mit einem gerundeten Bereich am Schenkel 32 anliegt. Ferner weist die Halteklammer 9 Anschlagglieder 37 auf, die sich am Wandabschnitt 6 abstützen.

Ein vom freien Ende 38 des Schenkels 31 nach oben hin abgestellter Steg 39 ist etwa bis zum Wandabschnitt 6 herangeführt, wobei der Steg 39 und der Schenkel 31 U-förmig aneinandergesetzt sind. In einem mittleren Bereich des Steges 39 sind die schräg nach oben ragenden federnden Zungen 15 angebracht.

Zur Demontage der Zierleiste 8 wird der Steg 39 mittels eines durch den Spalt 22 hindurchgeführten Hilfswerkzeuges 40 nach unten in eine Freigabestellung B gedrückt, wodurch die Zungen 15 außer Eingriff mit den Ausnehmungen 14 gelangen.

Die Zungen 15 sind in Richtung C derart vorgespannt, daß Toleranzen in Höhenrichtung D - D aufgenommen werden können. Mit der dargestellten Halteklammer 9 kann sowohl eine Zierleiste 8 befestigt werden, deren Stützabschnitt 11 eine Lage E oder aber eine gestrichelte Lage F einnimmt.

Gemäß Fig. 3 weist die Halteklammer je zwei Zungen 15, 16, zwei Anschlagglieder 37 und einen Stützabschnitt 36 auf.

**Patentansprüche**

1. Lösbare Befestigung einer Zierleiste (8) an einem Tragflansch (3) eines Kraftfahrzeuges, wobei die im wesentlichen zwei parallel zueinander verlaufende Stützabschnitte (10, 11) aufweisende Zierleiste (8) mit einer Halteklammer (9) zusammenwirkt und an der Halteklammer (9) wenigstens ein Rastglied (13) vorgesehen ist, das in eine angeordnete Ausnehmung (14) der etwa parallel zum Tragflansch (3) ausgebildeten Stützabschnitte (10, 11) form- und kraftschlüssig eingreift, gekennzeichnet durch die folgenden Merkmale:

a) die Halteklammer (9) ist an einem Bundbolzen (29) befestigt, welcher an der Oberseite des endseitigen Tragflansches (3) angebracht ist,

b) der eine Stützflansch (10) stützt sich abschnittsweise an der Unterseite (12) des Tragflansches (3) ab, wogegen der andere Stützabschnitt (11) oberhalb der Halteklammer (9) verläuft,

c) zumindest an letzterem Stützabschnitt (11) sind mehrere hintereinanderliegend angeordnete Ausnehmungen (14) vorgesehen, wobei das Rastglied (13) der Halteklammer (9) in eine dieser Ausnehmungen (14) eingreift.

2. Lösbare Befestigung nach Anspruch 1, dadurch gekennzeichnet, daß die Ausnehmungen (14) an beiden Stützabschnitten (10, 11) vorgesehen sind und mit angrenzend angeordneten Rastgliedern (13) der Halteklammern (9) zusammenwirken.

3. Lösbare Befestigung nach dem Anspruch 2, dadurch gekennzeichnet, daß die Rastglieder (13) durch abgestellte federnde Zungen (15, 16) der Halteklammer (9) gebildet werden.

4. Lösbare Befestigung nach dem Anspruch 2, dadurch gekennzeichnet, daß die Ausnehmungen (14) sägezahnartig ausgebildet sind.

5. Lösbare Befestigung nach Anspruch 1, dadurch gekennzeichnet, daß der Stützabschnitt (11) die untere Begrenzung einer etwa dreieckförmigen Querschnittserweiterung (21) der Zierleiste (8) bilden kann.

6. Lösbare Befestigung nach dem Anspruch 2, dadurch gekennzeichnet, daß die Ausnehmungen (14) oberhalb bzw. unterhalb der Halteklammer (9) vorgesehen sind, wobei die oberen Ausnehmungen (14) in Fahrzeugquerrichtung (A - A) gesehen, versetzt zu den unteren Ausnehmungen (14) angeordnet sind.

7. Lösbare Befestigung nach Anspruch 1, dadurch gekennzeichnet, daß an der Halteklammer (9) ein zum Wandabschnitt (6) gerichteter Steg (39) vorgesehen ist, der mittels eines, durch einen Spalt (22) einführbaren Hilfswerkzeuges (40) zur Demontage der Zierleiste (8) zugänglich ist.

8. Lösbare Befestigung nach Anspruch 7, dadurch gekennzeichnet, daß der Spalt (22) durch ein an der Zierleiste (8) befestigtes Dichtelement (23) abgedeckt ist.

## Claims

1. A detachable fastening of a trim moulding (8) on a support flange (3) of a motor vehicle, wherein the trim moulding (8) which essentially has two support portions (10, 11) extending parallel to each other cooperates with a holding clamp (9), and at least one catch member (13), which engages by positive and frictional locking in an arranged recess (14) of the support portions (10, 11) formed approximately parallel to the support flange (3), is provided on the holding clamp (9), characterized by the following features:

a) the holding clamp (9) is secured to a collar stud (29) which is supported on the top of the end support flange (3),

b) one support flange (10) [sic] is supported in part on the underside (12) of the support flange (3), whereas the other support portion (11) extends above the holding clamp (9),

c) a plurality of recesses (14) arranged one behind the other are provided at least on the latter support portion (11), the catch member (13) of the holding clamp (9) engaging in one of the said recesses (14).

2. A detachable fastening according to Claim 1, characterized in that the recesses (14) are provided on both support portions (10, 11) and cooperate with adjacently arranged catch members (13) of the holding clamps (9).

3. A detachable fastening according to Claim 2, characterized in that the catch members (13) are formed by projecting, resilient tongues (15, 16) of the holding clamp (9).

4. A detachable fastening according to Claim 2, characterized in that the recesses (14) are constructed in a serrated manner.

5. A detachable fastening according to Claim 1, characterized in that the support portion (11) can form the lower boundary of an approximately triangular cross-sectional extension (21) of the trim moulding (8).

6. A detachable fastening according to Claim 2, characterized in that the recesses (14) are provided above and below the holding clamp (9) respectively, the upper recesses (14) being arranged offset with respect to the lower recesses (14) as viewed in the transverse direction (A - A) of the vehicle.

7. A detachable fastening according to Claim 1, characterized in that a web (39), which is directed towards the wall portion (6) and which is accessible by means of an auxiliary tool (40) insertable through a gap (22) for dismantling the trim moulding (8), is provided on the holding clamp (9).

8. A detachable fastening according to Claim 7, characterized in that the gap (22) is covered by a sealing element (23) secured to the trim moulding (8).

## Revendications

1. Fixation amovible d'une moulure (8) sur une bride de support (3) d'un véhicule automobile, la moulure (8) comportant deux sections d'appui (10, 11) sensiblement parallèles coopérant avec un étrier de retenue (9) et au moins un élément d'accrochage (13) étant prévu sur l'étrier de retenue (9), lequel s'engage dans une encoche (14) correspondante des sections d'appui (10, 11) formées sensiblement parallèlement au rebord de support (3) avec concordance de forme et à force, caractérisée par les caractéristiques suivantes:

a) l'étrier de retenue (9) est fixé à un boulon à collet (29) qui est placé sur la face supérieure de la bride de support (3) situé à l'extrémité:

b) l'une des sections d'appui (10) s'appuie par sections sur la face inférieure (12) de la bride de support (3), tandis que l'autre section d'appui (11) s'étend au-dessus de l'étrier de retenue (9),

c) au moins sur la dernière section d'appui (11), on prévoit plusieurs encoches (14) successives, l'élément d'accrochage (13) de l'étrier (9) s'engageant dans l'une de ces encoches (14).

2. Fixation amovible selon la revendication 1, caractérisée en ce que les encoches (14) sont prévues sur les deux sections d'appui (10, 11) et coopèrent avec des éléments de crantage (13) des étriers de retenue (9) placés en position contiguës.

3. Fixation amovible selon la revendication 2, caractérisée en ce que les éléments d'accrochage (13) sont formés par des languettes élastiques écartées (15, 16) de l'étrier de retenue (9).

4 Fixation amovible selon la revendication 2, caractérisée en ce que les encoches (14) sont en dents de scie.

5. Fixation amovible selon la revendication 1, caractérisée en ce que la section d'appui (11) peut constituer la limite inférieure d'un agrandissement de section droite (21) sensiblement triangulaire de la moulure (8).

6. Fixation amovible selon la revendication 2, caractérisée en ce que les encoches (14) sont prévues au-dessous de l'étrier de retenue (9), les encoches supérieures (14) étant, dans la direction d'observation transversale du véhicule (A - A), décalées par rapport aux encoches inérieures (14).

7. Fixation amovible selon la revendication 1, caractérisée en ce qu'on prévoit sur l'étrier de retenue (9) une nervure (39) dirigée vers la section de paroi (6) qui est accessible au moyen d'un outil auxiliaire (40) pouvant être introduit par un intervalle (22) pour le démontage de la moulure (8).

8. Fixation amovible selon la revendication 7, caractérisée en ce que l'intervalle (22) est caché par un élément d'étancheité (23) fixé à la moulure (8).

FIG.1

R

FIG.:2

A — A

FIG.3